# EUROPÄISCHE PATENTANMELDUNG

(11) **EP 2 447 664 A1**
(43) Veröffentlichungstag der Anmeldung: **02.05.2012**
(21) Anmeldenummer: 11177620.9
(22) Anmeldetag: 16.08.2011
(51) Int. Cl.: G01B 11/12, G01B 11/24, G01N 21/88, B29C 47/00

(54) **Vorrichtung zum Erfassen von Messinformationen von einer inneren Oberfläche eines Hohlkörpers, insbesondere einer Bohrung eines ein- oder zweiwelligen Extruderzylinders**

(30) Priorität: 26.10.2010 DE 102010049401
(71) Anmelder: Leistritz Extrusionstechnik GmbH, 90459 Nürnberg (DE)
(72) Erfinder: Turnwald, Klaus, 90475 Nürnberg (DE); Bittner, Christoph, HP 3 9PT Hertfortshire (GB); Vitzthum, Helmut, 90617 Puschendorf (DE)
(74) Vertreter: Blaumeier, Jörg

(57) **Zusammenfassung**

Vorrichtung zum Erfassen von Messinformationen von einer inneren Oberfläche eines Hohlkörpers, insbesondere einer Bohrung eines ein- oder zweiwelligen Extruderzylinders, umfassend einen durch den Hohlkörper zu bewegenden Schlitten (3) mit Roll- und/oder Gleitführungsmitteln (4, 5) zur Bewegungslagerung auf der Oberfläche (8), sowie eine am Schlitten (3) vorgesehenen Laser-Messeinrichtung (16) umfassend einen positionsfest angeordneten Laser (19), der einen Laserstrahl (28) im Wesentlichen parallel zur Schlittenlängsachse emittiert, einen drehbaren Spiegel (20) zum Ablenken des Laserstrahls (28) auf die Oberfläche (8) und zum Ablenken eines von der Oberfläche (8) reflektierten Reflexionslichts (30) auf einen positionsfest angeordneten Detektor (24), der ein mittels einer Verarbeitungseinrichtung (17) auswertbares Messsignal erzeugt.

## Beschreibung

Die Erfindung betrifft eine Vorrichtung zum Erfassen von Messinformationen von einer inneren Oberfläche eines Hohlkörpers, insbesondere einer Bohrung eines ein- oder zweiwelligen Extruderzylinders.

Oberflächen von Arbeitsmaschinen sind häufig mechanischen Belastungen ausgesetzt, die zu einem Verschleiß der Oberfläche führen, die Oberflächengüte verändert sich nachteilig. Ab einem gewissen Verschleißgrad ist ein dem gewünschten Arbeitsergebnis gerecht werdendes Arbeiten mit der Maschine unter Umständen nicht mehr möglich. Entweder ist ein Aufbereiten der Oberfläche erforderlich, um die gewünschte Oberflächengüte wieder herzustellen, oder es ist ein Austausch des jeweiligen, dann verschlissenen Bauteils erforderlich.

Ein Beispiel für eine solche Arbeitsmaschine ist ein Extruder, mit dem unterschiedlichste Materialien verarbeitet werden können. Ein solcher Extruder umfasst einen Extruderzylinder, der üblicherweise aus mehreren hintereinander angeordneten Zylindersegmenten besteht. Durch den Extruderzylinder verläuft in Längsrichtung eine Bohrung, die als zylindrische Bohrung zur Aufnahme einer Schneckenwelle ausgeführt ist, oder die als sogenannte Brillenbohrung bestehend aus zwei ineinander greifenden Bohrungen zur Aufnahme zweier gleichsinnig oder gegensinnig drehender Schneckenwellen ausgeführt ist. Im Betrieb wird die Bohrungsoberfläche beansprucht, so dass es zu Verschleißerscheinungen kommen kann.

Um den Verschleiß einer solchen Hohlkörperoberfläche wie beispielsweise einer Bohrung eines Extruderzylinders erfassen zu können, ist aus EP 2 101 145 A1 ein Messgerät bekannt, das einen auf vier Einzelrollen verschiebbar gelagerten Schlitten aufweist, an dem seitlich von der Schlittenlängsachse versetzt zwei Laser-Entfernungsmesser angeordnet sind, die jeweils um eine parallel zur Schlittenlängsachse liegende Schwenkachse verschwenkt werden können. Mit Hilfe dieser Laser-Entfernungsmesser kann ein Abstandswert zur Bohrungswand erfasst und hierüber der Verschleißgrad bestimmt werden.

Der Aufbau dieser Messvorrichtung ist aufwändig und kompliziert, insbesondere nachdem zwei separate Laser-Entfernungsmesser eingesetzt werden, die jeweils separat verschwenkt werden. Weiterhin muss für jede Gehäusebohrung - die Messvorrichtung ist zum Erfassen des Verschleißzustandes einer Bohrung für mindestens zwei Schneckenwellen, also einer Brillenbohrung, vorgesehen - für jede einzelne Bohrung ein separater Messdatensatz aufgenommen werden, was den Messaufwand verdoppelt. Weiterhin sind die jeweiligen Datensätze in irgendeiner Weise einander zuzuordnen, um aussagefähige, positionsbezogene Informationen zu bekommen.

Der Erfindung liegt damit das Problem zugrunde, eine Messvorrichtung anzugeben, die bei einfachem Aufbau eine vereinfachte Messinformationserfassung ermöglicht.

Zur Lösung dieses Problems ist erfindungsgemäß eine Vorrichtung zum Erfassen von Messinformationen von einer inneren Oberfläche eines Hohlkörpers, insbesondere einer Bohrung eines ein- oder zweiwelligen Extruderzylinders, vorgesehen, umfassend einen durch den Hohlkörper zu bewegenden Schlitten mit Roll- und/oder Gleitführungsmitteln zur Bewegungslagerung auf der Oberfläche, sowie eine am Schlitten vorgesehene Laser-Messeinrichtung, umfassend einen positionsfest angeordneten Laser, der einen Laserstrahl im Wesentlichen parallel zur Schlittenlängsachse emittiert, einen drehbaren Spiegel zum Ablenken des Laserstrahls auf die Oberfläche und zum Ablenken eines von der Oberfläche reflektierten Reflexionslichts auf einen positionsfest angeordneten Detektor, der ein mittels einer Verarbeitungseinrichtung auswertbares Messsignal erzeugt.

Bei der erfindungsgemäßen Vorrichtung ist am über entsprechende Roll- und/oder Gleitmittel bewegungsgelagerten Schlitten nur ein Laser vorgesehen, der positionsfest angeordnet ist, sich also während der Messung selbst nicht relativ zum Schlitten bewegt. Der Laser ist schlittenmittig angeordnet, der Laserstrahl wird parallel zur Schlittenlängsachse emittiert. Um den Laserstrahl nun auf die zu vermessende Oberfläche zu projizieren, ist erfindungsgemäß ein drehbarer Spiegel vorgesehen, auf den der Laserstrahl trifft. Dieser Spiegel steht bevorzugt unter einem Winkel von 45° zur Schlittenlängsachse, er dreht um die Schlittenlängsachse. Dies führt dazu, dass bei einer 360°-Drehung der Laserstrahl kreisförmig um 360° und in einem Winkel von 90° zu seiner Einstrahlrichtung auf den Spiegel auf die Bohrungswand geworfen wird. Hierüber kann also eine 360°-Abtastung der Bohrungswand vorgenommen werden. Da sich der Laser in der Schlittenmitte befindet, die sich wiederum in der Bohrungsmitte befindet, nachdem der Schlitten nach Einsetzen in die Bohrung in dieser mittig längsbewegt wird, ist es infolgedessen ohne weiteres möglich, auch die Oberfläche einer Brillenbohrung, die sich in der Mitte im Zwickelbereich etwas einschnürt, vollständig abzutasten, wobei sich auch im Zwickelbereich kein Abtastschatten ergibt.

Von der Oberfläche, die immer eine gewisse, wenngleich mitunter sehr geringe, Grundrauigkeit aufweist, wird nun ein gewisser Teil des eingestrahlten Laserlichts, das bevorzugt als äußerst kleiner Punktlichtstrahl appliziert wird, auf den Drehspiegel zurückgeworfen. Über den Spiegel gelangt das Licht sodann auf einen Detektor, an dem das Licht am Einfallort ein Messsignal erzeugt. Der Detektor, z.B. ein eindimensionaler Zeilendetektor (Photodiodenzeile oder CCD-Zeile) oder ein zweidimensionaler flächiger Detektor, weist eine möglichst hohe Auflösung auf, um den Auftreffort möglichst exakt bezogen auf die Detektorfläche bestimmen zu können.

Der Auftreffort wiederum ist nun abhängig vom Abstand des oberflächen- oder bohrungswandseitigen Reflexionsorts zum lagefesten Messsystem, also zum feststehenden Laser oder zum ebenfalls feststehenden Detektor. Dieser Abstand variiert lokal infolge des Verschleißes. Denn verschleißbedingt nehmen die Oberflächenrauigkeiten bzw. Inhomogenitäten zu, was dazu führt, dass sich verschleißbedingt eine Oberflächenstruktur ausbildet. Diese Oberflächenstruktur besitzt zwangsläufig rauigkeitsbedingt höher und tiefer liegende Bereiche, das heißt, dass sich zwangsläufig lokale Abstandsvariationen ergeben. Das vom Laser kommende, über den Spiegel auf die Oberfläche applizierte, punktförmige kollimierte Laserlicht wird also an einer Stelle früher reflektiert, da an diesem Reflexionsort der Abstand (also der Weg des Laserlichtstrahls) zum feststehenden Laser geringer ist als an einem anderen, tiefer in der Wand liegenden Reflexionsort, wo der Abstand zum Laser etwas größer ist.. Aufgrund der unterschiedlichen weit beabstandeten Reflextionsorte an der Oberfläche treffen die jeweiligen Reflexionslichtstrahlen an unterschiedlichen Orten auf den Spiegel, was folglich dann dazu führt, dass die vom Spiegel abgelenkten Reflexionslichtstrahlen, vorzugsweise über eine dem Spiegel nachgeschaltete Optik fokussiert, an unterschiedlichen Orten am Detektor auftreffen. Hieraus folgt wiederum, dass der Auftreffort am feststehenden Detektor folglich abhängig vom Abstand des Reflexionsortes der Wand zu einem der feststehenden Bauteile, also dem Laser, dem Spiegel (der bezogen auf die Laserlichtgeschwindigkeit trotz Drehung als feststehend angesehen werden kann) oder dem Detektor ist. Im Rahmen der Signalerfassung wird folglich der Detektorort bestimmt, an dem das Reflexionslicht auftrifft. Diese Information wird sodann im Rahmen der weiteren Verarbeitung zur Ermittlung der gewünschten Verschleißinformation verwendet. Aufgrund der umfänglichen Abtastung mit dem feinen Laserstrahl, der einen Lichtfleck von nur wenigen Quadratmillimetern, vorzugsweise nur ca. 1 Quadratmillimeter oder weniger abbildet, kann folglich ein hochgenaues Rauigkeitsprofil und damit ein Verschleißprofil erstellt werden.

Diese Verarbeitung kann in Weiterbildung der Erfindung mittels der Verarbeitungseinrichtung derart erfolgen, dass die Verarbeitungseinrichtung eine trigonometrische Auswertung der Messsignale dahingehend vornimmt, dass der Abstand des Ortes des Lasers von der Hohlkörperoberfläche, also dem Reflexionsort, bestimmt wird. Die Verarbeitungseinrichtung nimmt also eine trigonomische Geraden- und Winkelbetrachtung vor, über die die Länge des Weges des Laserstrahls vom feststehenden Laser bis zum Reflexionsort bestimmt wird. Das heißt, dass durch eine einfache Triangulationsbetrachtung ein aussagekräftiger Abstandswert für jeden betrachteten Abtastpunkt erfasst werden kann, wobei anhand der Vielzahl der Abstandswerte, die je nach Verschleißgrad variieren, eine Verschleißinformation erhalten werden kann. Diese Bestimmung kann durch exakte Berechnung erfolgen, da die relevanten Parameter (Abstände der optischen Komponenten zueinander, Brennweite der Optik (Linse), Winkel der Schrägstellung des Detektors relativ zur Emissionsrichtung des Laserstrahls etc.). Denkbar ist auch die Verwendung einer Kalibrierfunktion, d.h. dass die Lasermesseinrichtung an realen Objekten mit bekannten Abständen eingemessen ist und mittels dieser Kalibrierfunktion sodann aus dem Detektorort direkt auf die Lage des Reflexionsorts bzw. dessen Abstand geschlossen werden kann. Da der Laser und der Detektor ijm gleichen Bezugssystem lagefest angeordnet sind, wäre grundsätzlich auch eine Bestimmung des Abstands des Lichtauftrefforts am Detektor zum Reflexionsort denkbar.

In Weiterbildung der Erfindung kann die Verarbeitungseinrichtung auch durch Auswertung der ermittelten Abstandswerte zur Ermittlung zweier für die Geometrie des Hohlkörpers charakteristischer Orte, insbesondere der Zwickel einer Brillenbohrung eines Zweischneckenzylinders, und anhand der zu diesen erfassten Abstandswerten und des Winkels von vom Detektor der zu diesen Orten laufenden Verbindungslinien relativ zu einer Bezugsebene zu trigonometrischen Ermittlung der Position des Detektors relativ zu den Orten ausgebildet sein. Nachdem wie beschrieben bei Einsatz der Vorrichtung zur Vermessung einer Brillenbohrung infolge der Querschnittsform der Bohrung charakteristische Dimensionen, hier beispielsweise der Zwickelabstand, wo der Wandabstand minimal ist, oder der quer dazu gegebene Abstand von Wand zu Wand, wo der Abstand maximal ist, gegeben sind, kann anhand der ermittelten Abstandswerte die Position dieser charakteristischen Orte, also beispielsweise die Lage der beiden Zwickel, erfasst werden, woraus wiederum durch einfache trigonometrische Betrachtung die relative Position des Detektors zu einer bestimmten Bezugsebene, beispielsweise der Verbindungsebene der beiden Zwickel, ermittelt werden kann. Hierüber kann folglich kontinuierlich die Detektorposition erfasst werden, wie natürlich auch eine etwaige Relativverschiebung der Detektorposition zu dieser Ebene, die sich beispielsweise beim Bewegen der Vorrichtung durch die Brillenbohrung einstellt.

In jedem Fall ist es folglich mit der erfindungsgemäßen Vorrichtung möglich, bei einer einzigen 360°-Drehung des Spiegels einerseits eine Vielzahl einzelner Orte an der Oberfläche abzutasten und zu diesen die einzelnen Abstandswerte und damit Verschleißinformationen zu ermitteln. Andererseits kann innerhalb jeder 360°-Drehung anhand der ermittelten Abstandswerte auch eine Positions- oder Lageerfassung des lagefesten Detektors innerhalb der Bohrung bzw. des Hohlkörpers vorgenommen werden, so dass kontinuierliche Positions- oder Ortsinformationen vorliegen, gestützt auf welche sofern erforderlich eine Korrektur der erfassten Messwerte vorgenommen werden kann, nämlich dann, wenn es zu einer Relativverschiebung des Schlittens zur Bohrung kommt und folglich die beiden Koordinatensysteme, nämlich das Koordinatensystem der Bohrung bzw. des Hohlkörpers und das Koordinatensystem der Laser-Messeinrichtung, sich relativ zueinander verschieben. Anhand dieser Kenntnis kann sodann eine entsprechende Koordinatentransformation vorgenommen werden. Dies führt wiederum dazu, dass über die gesamte axiale Messstrecke trotz etwaiger Schlittenbewegungen aussagekräftige weil miteinander referenzierte Messwerte erhalten werden. Das heißt, dass pro 360°-Spiegeldrehung sowohl eine Erfassung sämtlicher Abstandswerte als auch eine Bestimmung der Schlittenposition respektive der Detektorposition vorgenommen werden kann.

Um eine Zuordnung des jeweiligen Messwerts zu einem bestimmten Messort vornehmen zu können, ist es erforderlich, die Spiegelposition zu erfassen, also die Drehstellung des Spiegels aufzunehmen. Hierzu ist zweckmäßigerweise eine Messeinrichtung, insbesondere ein Encoder, zur kontinuierlichen Erfassung der Spiegelposition vorgesehen. Der Encoder kommuniziert mit der Verarbeitungseinrichtung, damit zu jedem am Detektor aufgenommenen Messsignal stets die Drehposition des Spiegels bekannt ist, woraus sich dann im Rahmen der trigonometrischen Betrachtung eine umfangsmäßige Zuordnung des erfassten Messwerts bzw. ermittelten Abstandswerts zu einem ganz bestimmten Oberflächenpunkt erreichen lässt.

Um eine möglichst dichte Oberflächenabtastung vorzunehmen, rotiert der Spiegel mit einer Frequenz von wenigstens 10 Hz, insbesondere von wenigstens 20 Hz, so dass also pro Sekunde die Oberfläche mehrfach um 360° abgetastet wird.

Dem Detektor ist zweckmäßigerweise eine Optik in Form wenigstens einer Linse vorgeschaltet, über die das vom Spiegel kommende Reflexionslicht lichtoptisch bearbeitet, beispielsweise gebündelt oder fokussiert wird. Über die Linse ist es gegebenenfalls auch möglich, etwaige nicht im Rahmen der Messung zu berücksichtigende Reflexionslichtanteile, die aufgrund der teilweise diffusen Reflexion an der Oberfläche auf den Drehspiegel treffen, zu separieren.

Grundsätzlich ist aufgrund der gegebenen Oberflächenrauigkeit ein gewisser diffuser Reflexionslichtanteil gegeben. Das heißt, dass das Reflexionslicht nicht als scharf gebündelter Einzelstrahl auf den Spiegel zurückreflektiert wird, sondern gegebenenfalls als diffuses Lichtbündel. Es hat sich jedoch gezeigt, dass sich am Detektor, letztlich dem Fermat'schen Prinzip folgend, selbst dann, wenn vom Spiegel ein einen gewissen diffus gestreuten Anteil aufweisendes Reflexionslicht auf den Detektor abgebildet wird, sich im Bereich des kürzesten Lichtwegs ein Signalmaximum ausbildet, das für die Abstandsbestimmung betrachtet wird.

Der Laser selbst wird bevorzugt gepulst betrieben, wobei die Pulsfrequenz durchaus auch beachtlich hoch sein kann. Als Laser wird bevorzugt ein Infrarot-Laser, vorzugsweise mit einer Leistung von wenigstens 10 mW, insbesondere von wenigstens 50 mW, verwendet.

Wichtig ist eine möglichst mittige Anordnung des Schlittens im Hohlkörper, um zu gewährleisten, dass sich einerseits der schlittenmittige Laser in der Bohrungsmitte befindet, damit beispielsweise beim Abtasten einer Brillenbohrung im Zwickelbereich keine Abschattungen vorkommen, andererseits ist sicherzustellen, dass der Schlitten diese Position während seiner axialen Bewegung durch den Hohlkörper beibehält. Zu diesem Zweck ist gemäß einer besonders vorteilhaften Weiterbildung der Erfindung der Schlitten über die beweglich gelagerten Roll- und/oder Gleitführungsmittel selbstzentrierend in dem Hohlkörper positionierbar. Das heißt, dass die Roll- und/oder Gleitführungsmittel derart ausgelegt sind, dass über sie der Schlitten stets mittig im Hohlkörper positioniert ist. Dabei können die Roll- oder Gleitführungsmittel lösbar und austauschbar sein, um die Vorrichtung an unterschiedliche Hohlkörpergrößen oder Bohrungsgrößen anpassen zu können. Der Schlitten in seiner Form bleibt also stets gleich, es werden lediglich die Roll- und/oder Gleitführungsmittel je nach Größe des zu messenden Hohlkörpers ausgetauscht.

Zur Ermöglichung der Selbstzentrierung sind die Roll- und/oder Gleitführungsmittel jeweils gegen die Rückstellkraft wenigstens eines, vorzugsweise mehrerer Federelemente, beweglich gelagert. Über diese Federelemente werden die Roll- oder Gleitführungen stets gegen die Hohlkörperoberfläche gedrückt, wobei die Federn in ihren Federeigenschaften allesamt gleich ausgelegt sind, so dass an allen Seiten ein symmetrischer Anpressdruck gegeben ist und folglich der Schlitten mittig positioniert werden kann.

In Weiterbildung der Erfindung können dabei zwei um 180° versetzt zueinander am Schlitten angeordnete erste Rollführungsmittel umfassend jeweils mehrere hintereinander angeordnete, vorzugsweise miteinander bewegungsgekoppelte, Rollen, sowie wenigstens zwei, vorzugsweise vier, weitere Roll- oder Gleitführungsmittel vorgesehen sein. Der Schlitten wird also über diese beiden ersten Rollführungsmittel auf Rollen gelagert, über die er auf der Oberfläche abrollt. Darüber hinaus sind wenigstens zwei, vorzugsweise vier, weitere Roll- oder Gleitführungsmittel vorgesehen, die eine zusätzliche Führung bewirken. Diese weiteren Roll- oder Gleitführungsmittel können am Schlitten vorgesehen sein, oder an den ersten Rollführungsmitteln selbst. Die weiteren Mittel können ebenfalls als Rollenreihen oder als Gleitkufen ausgeführt sein.

Wie bereits einleitend beschrieben, ist die Vorrichtung axial durch den Hohlkörper, also beispielsweise den Extruderzylinder, zu bewegen, um die gesamte Oberfläche zu vermessen. Um ein axial aufgelöstes Oberflächen- oder Rauigkeitsprofil zu erhalten, ist es erforderlich, die jeweilige axiale Position des Schlittens zu erfassen, um darüber die jeweilige Position des abgetasteten Oberflächenortes zu kennen. Um die axiale Position der Vorrichtung zu bestimmen, ist gemäß einer Weiterbildung der Erfindung wenigstens einem Roll- und/oder Gleitführungsmittel, insbesondere dem ersten Rollführungsmittel ein der Bestimmung der axialen Position des Schlittens im Hohlkörper dienende Messsignale lieferndes Erfassungsmittel, insbesondere ein mit einer Rolle bewegungsgekoppelter Encoder, zugeordnet. Dieses Erfassungsmittel liefert also kontinuierlich die Axialposition beschreibende Signale, wobei natürlich zu Beginn einer Messung eine axiale Ausgangsposition definiert werden muss. Wird beispielsweise ein Encoder eingesetzt, so ist dieser mit einer Rolle bewegungsgekoppelt, so dass er zwangsläufig jede Rollenbewegung und damit jede axiale Bewegung erfasst. Die entsprechenden Positionsmesssignale werden selbstverständlich der Verarbeitungseinrichtung gegeben, die diese dann entsprechend berücksichtigt respektive den erfassten Abstandswerten zuordnet.

Seitens der Verarbeitungseinrichtung kann ferner auch eine Zuordnung von Bildinformationen, die mit einer optional an der Vorrichtung vorsehbaren Kamera von der Hohlkörperoberfläche aufgenommen werden, erfolgen. Das heißt, dass auch diese Kamerabilder den jeweiligen Axialpositionen zugeordnet werden können, so dass nachfolgend zu bestimmten, anhand der Verschleißwerte auffälligen Bereichen auch die entsprechenden Kamerabilder zugeordnet und dargestellt werden können. Dadurch lässt sich insgesamt eine vollständige Datensynchronisation vornehmen.

Neben der Vorrichtung betrifft die Erfindung ferner ein Verfahren zur Ermittlung von Zustandsinformationen einer Oberfläche eines Hohlkörpers, insbesondere einer Bohrung eines ein- oder zweiwelligen Extruderzylinders, unter Verwendung einer Vorrichtung zur berührungslosen Oberflächenabtastung mittels eines Lasers, vorzugsweise einer Vorrichtung der beschriebenen Art. Dieses Verfahren zeichnet sich dadurch aus, dass eine Vorrichtung umfassend einen durch den Hohlkörper bewegten Schlitten, an dem positionsfest der Laser und ein Detektor sowie ein rotierender Spiegel angeordnet sind, verwendet wird, wobei der von dem Laser im Wesentlichen in Richtung der Längsachse des Schlittens emittierte Laserstrahl mittels des um die Längsachse rotierenden Spiegels auf die Oberfläche gelenkt und ein von der Oberfläche reflektierendes Reflexionslicht über den Spiegel auf den Detektor gelenkt wird, der Messsignale liefert, die von einer Verarbeitungseinrichtung kontinuierlich zur Bestimmung des Abstands des Ortes des Lasers oder des Ortes, an dem das Reflexionslicht auf den Detektor trifft, von der Oberfläche trigonometrisch ausgewertet werden.

Dabei können in der Verarbeitungseinrichtung anhand der während eines 360°-Umlaufs des Spiegels ermittelten Abstandswerte zwei für den Hohlkörper charakteristische Orte, insbesondere die Zwickel einer Brillenbohrung eines Zweischneckenzylinders, ermittelt werden und anhand der zu diesen erfassten Abstandswerte und des Winkels von vom Detektor zu diesen Orten laufenden Verbindungslinien relativ zu einer Bezugsebene die Position des Detektors oder eines ausgezeichneten Ortes am Detektor relativ zu den Orten trigonometrisch ermittelt werden.

Ferner kann kontinuierlich die axiale Position der Vorrichtung im Hohlkörper ermittelt und den erfassten Abstandswerten zugeordnet werden.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung einer erfindungsgemäßen Vorrichtung, eingebracht in eine geöffnet gezeigte Brillenbohrung, in einer Aufsicht,

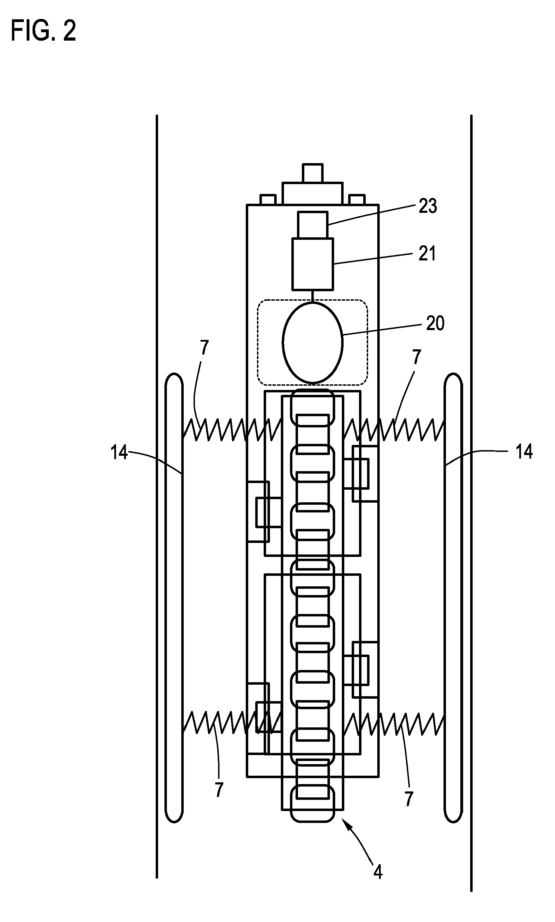

- Fig. 2: die Vorrichtung aus Fig. 1 in um 90° gedrehter Seitenansicht,
- Fig. 3: die Vorrichtung aus Fig. 1 in einer Stirnseitenansicht mit Blick in die Brillenbohrung,
- Fig. 4: eine Prinzipdarstellung des Verlaufs der über den drehenden Spiegel auf die Oberflächen abgelenkten Laserstrahlen,
- Fig. 5: eine Darstellung zur Erläuterung des Messprinzips der erfindungsgemäß verwendeten Laser-Triangulationsmesseinrichtung bei einer Messung zur einen Seite,
- Fig. 6: eine Prinzipdarstellung entsprechend Fig. 5 bei einer Messung zur anderen Seite, und
- Fig. 7: eine Prinzipdarstellung zur Erläuterung der eigenständigen Positionserfassung des Schlittens relativ zur Brillenbohrung.

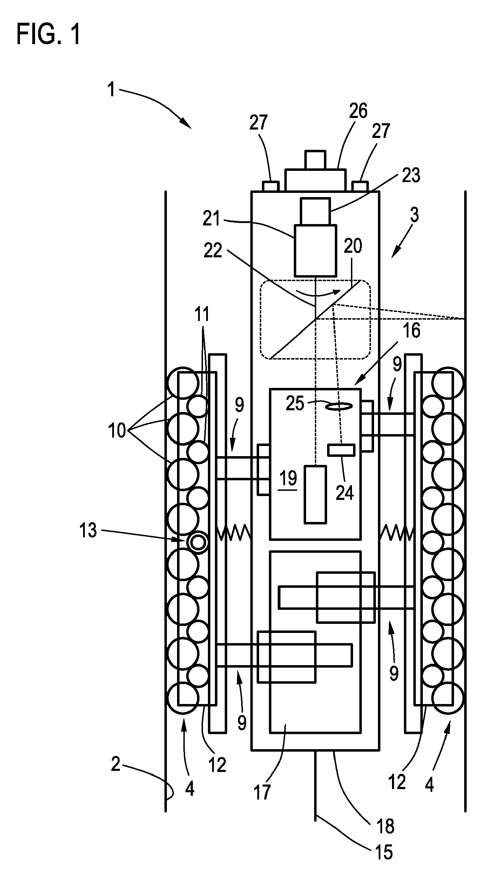

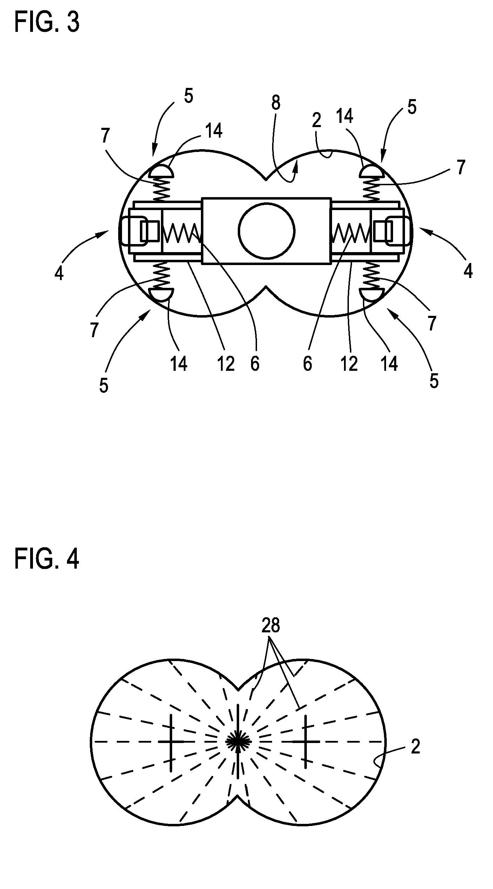

Fig. 1 zeigt in Form einer Prinzipdarstellung eine erfindungsgemäße Vorrichtung 1, die in einer Bohrung 2 eines zweiwelligen Extruderzylinders angeordnet ist. Die Bohrung 2, auch Brillenbohrung genannt, ist lediglich angedeutet, ihre Geometrie ist in Fig. 3 dargestellt.

Die erfindungsgemäße Vorrichtung 1 umfasst einen Schlitten 3, der im gezeigten Ausführungsbeispiel über zwei einander gegenüberliegende Rollführungsmittel 4 sowie insgesamt vier Gleitführungsmittel 5, von denen zwei nach oben und zwei nach unten gerichtet sind (siehe Fig. 3) in der Bohrung 2 axial beweglich geführt. Damit die Vorrichtung 1 respektive der Schlitten 3 quasi selbstzentrierend in der Bohrungsmitte angeordnet wird, sind sowohl die Rollführungsmittel 4 als auch die Gleitführungsmittel 5 jeweils über Federn 6, 7 gegen eine Rückstellkraft längsverschieblich relativ zum Schlitten 3 gelagert. Im gezeigten Ausführungsbeispiel ist jeweils eine Feder 6, 7 gezeigt, selbstverständlich können über die Länge der jeweiligen Roll- und Gleitführungsmittel 4, 5 natürlich auch mehrere eine Rückstellkraft erzeugende Federn 6, 7 angeordnet sein. Über diese Federn 6, 7 werden die Roll- und Gleitführungsmittel 4, 5 stets an die Bohrungsinnenwand, also an die zu vermessende Oberfläche 8 gedrückt. Da die Federn 6, 7 allesamt gleich ausgelegt sind, ergibt sich folglich eine Zentrierung des Schlittens 3 in der Bohrungsmitte.

Wie der Prinzipdarstellung gemäß Fig. 1 und Fig. 3 zu entnehmen ist, sind die beiden Rollführungsmittel 4 an den einander gegenüberliegenden Schlittenseiten angeordnet, sie sind am Schlitten über entsprechende Linearführungen 9 längsverschieblich aufgenommen. Wie Fig. 3 zu entnehmen ist, sind die Gleitführungsmittel 5 beim gezeigten Ausführungsbeispiel an den Rollführungsmitteln 4 längsverschieblich und federgelagert aufgenommen. Auch hierzu sind entsprechende, wenngleich nicht näher gezeigte Linearführungen, die eine Längsbewegung relativ zu den Rollführungsmitteln 4 ermöglichen, vorgesehen.

Im gezeigten Ausführungsbeispiel bestehen die beiden Rollführungsmittel jeweils aus mehreren separat drehgelagerten Rollen 10, die über Koppelrollen 11 alle miteinander bewegungsgekoppelt sind. Jeweils eine Koppelrolle 11 befindet sich zwischen zwei benachbart angeordneten Rollen 10. Dies bewirkt, dass bei Drehung einer einzigen Rolle 10 automatisch alle anderen Rollen 10 ebenfalls bewegt werden. Die Rollen 10 wie auch die Koppelrollen 11 sind in geeigneten Drehlagerungen an einem Rollenhalter 12 angeordnet, der über die Linearführungen 9 am Schlitten 2 aufgehängt ist. Im Bereich einer der Rollenreihen ist ein Erfassungsmittel, hier in Form eines Encoders 13, angeordnet. Der Encoder 13 dient der Erfassung einer Bewegung einer mit ihm bewegungsgekoppelten Rolle 10, das heißt, über ihn werden Messsignale generiert, die ein Maß für eine Rollenbewegung sind, mithin also für eine Axialbewegung der Vorrichtung 1 in der Bohrung 2. Diese Signale werden an eine nachfolgend noch beschriebene Verarbeitungseinrichtung gegeben, die im Stande ist, hieraus die exakte Axialposition der Vorrichtung 1 in der Bohrung 2 zu ermitteln, was, worauf nachfolgend noch eingegangen wird, erforderlich ist, um eine Zuordnung der über die noch zu beschreibende Lasermesseinrichtung zu ermittelnden Zustandsinformationen der abzutastenden Oberfläche zu diskreten Axialpositionen der Bohrung vorzunehmen.

Bei den Gleitführungsmitteln 5 handelt es sich um längliche Gleitkufen 14, beispielsweise aus einem Gleitwerkstoff wie POM. Die Länge der Gleitkufen 14 entspricht bevorzugt mindestens der Länge der Rollenreihen der Rollführungsmittel 4. Die Verwendung eines Gleitwerkstoffs wie POM ist dahingehend vorteilhaft, dass eine möglichst leichte Verschiebung der Vorrichtung in der Bohrung möglich ist, da somit weder über die Rollen 10 noch über die Gleitkufen 14 ein größerer Reibungswiderstand der Axialbewegung entgegengesetzt wird. Statt der Gleitkufen 14 könnten aber auch hier Rollenreihen eingesetzt werden. Zum axialen Bewegen der Vorrichtung 1 durch die Bohrung 2 dient eine hier nicht näher beschriebene mechanische Vorschub- oder Zugeinrichtung 15, beispielsweise eine Zugstange oder ein Zugseil, das mit einem Zugmotor oder dergleichen gekoppelt ist.

Am Schlitten 3 ist die Lasermesseinrichtung 16 wie auch die Verarbeitungseinrichtung 17 angeordnet. Der Schlitten 3 umfasst ein Gehäuse oder einen Rahmen 18, der geeignet ist, die entsprechenden Gerätschaften aufzunehmen.

Die Lasermesseinrichtung 16 umfasst einen lagefest und mittig am Schlitten 3 angeordneten Laser 19, vorzugsweise ein IR-Laser. Vorgesehen ist ferner ein drehbarer Spiegel 20, der unter einem Winkel von 45° zur Achse des emittierten Laserstrahls steht. Der Spiegel 20 ist über einen Motor 21 um eine Drehachse 22 drehbar, beispielsweise mit einer Frequenz von 20 Hz. Die Drehachse verläuft ebenfalls in der Schlittenmitte. Über den Spiegel 20 wird, wie in Fig. 1 angedeutet, der Laserstrahl zur Bohrungswand 8 reflektiert, also um 90° abgelenkt. Dem Motor 21 zugeordnet ist auch hier eine Messeinrichtung, beispielsweise in Form eines Encoders 23, über den mit hoher Auflösung die exakte Winkelposition des drehenden Spiegels 20 erfasst werden kann.

Am Schlitten 3 vorgesehen ist ferner ein lagefest angeordneter zeilenförmiger oder flächiger Detektor 24, z.B. eine 1-dimensionale Photodiodenzeile oder eine CCD-Zeile, mit dem über eine ihm vorgeschaltete Linse 25 ein von der Bohrungswand auf den Spiegel 20 zurückreflektierter Reflexionslichtstrahl, der von dem Spiegel 20 auf die Linse 25 und von dieser auf den Detektor 24 trifft, erfasst wird. Das Messprinzip wird nachfolgend noch näher erläutert. In jedem Fall kann durch die Rotation des Spiegels 20 nahezu die gesamte Bohrungsoberfläche abgetastet werden, wobei der Laser 19 den Laserstrahl bevorzugt gepulst emittiert, wobei eine relativ hohe Pulsfrequenz gewählt wird.

An dieser Stelle sei darauf hingewiesen, dass das Gehäuse 18 im Bereich des Aus- und Eintritts des Laserlichts zur bzw. von der Bohrungswand selbstverständlich offen ist. Lediglich aus mechanischen Gründen, um das Gehäuse zu stabilisieren, sind einige wenige Axialstreben vorgesehen, die jedoch möglichst dünn bzw. schmal auszuführen sind, damit eine möglichst geringe Abschattung zur Bohrungswand gegeben ist. Denkbar ist es auch, das Gehäuse abschnittsweise aus lichtdurchlässigem Material wie Glas auszuführen, so dass der Laserstrahl ohne wesentliche Abschattung alle Stellen des Hohlkörpers abtasten kann.

Am vorderen Ende des Gehäuses 18 befindet sich schließlich noch eine Kamera 26, der mehrere Beleuchtungseinrichtungen 27 zugeordnet sind. Die Kamera 26 dient der Erfassung optischer Bilder von der Oberfläche, wobei diese Kamerabilder den mittels der Lasermesseinrichtung 16 erfassten Messwerten über die erfasste Axialposition genau zugeordnet werden können.

Vorgesehen ist wie beschrieben ferner eine Verarbeitungseinrichtung 17, beispielsweise ein hinreichend schnell arbeitender Prozessor oder ähnliches, der - gegebenenfalls neben der Steuerung der Vorrichtung - den gesamten Signalauswertebetrieb vornimmt. Ihm zugeordnet ist beispielsweise eine Speichereinheit, um die Daten abzulegen und ähnliches. Die Verarbeitungseinrichtung empfängt sämtliche relevanten Informationen wie beispielsweise die Signale der beiden Encoder 13 und 23 sowie die entsprechenden Signale des Detektors 24 und die Signale der Kamera 26, um diese zu bearbeiten respektive soweit erforderlich einander zuzuordnen.

Die Lasermesseinrichtung 16 wie auch die Verarbeitungseinrichtung 17 sind dazu ausgelegt, Abstandswerte zu einem ausgezeichneten Punkt zur Hohlkörperoberfläche zu ermitteln, wobei diese Abstandswerte respektive der Verlauf der Abstandswerte über die axiale Länge ein Rauhigkeitsbild und damit ein Verschleißbild der Oberfläche wiedergeben. Die Ermittlung dieser Messinformationen erfolgt durch eine trigonometrische Auswertung der Messsignale unter Berücksichtigung der bekannten relativen Anordnungen von Laser 19, Spiegel 20, Spiegelposition und Auftreffort am flächigen Detektor 24. Bei der Lasertriangulation wird im Rahmen der Entfernungsmessungstechnik der Abstand entlang des beleuchtenden, kollimierten Laserstrahls ermittelt. Sobald dieser auf eine Oberfläche, hier der zu vermessenden Fläche, trifft, wird das Licht zum Teil absorbiert, zum Teil geometrisch reflektiert und zum Teil diffus reflektiert. Die jeweiligen Anteile werden durch die Absorption und Oberflächenrauhigkeit der Oberfläche bestimmt. Bei der Vermessung einer Bohrungswand (erodierte Metallwand) wird der überwiegende Teil diffus reflektiert. Derjenige diffus reflektierte Anteil, der auf den Spiegel trifft, wird zum Teil auf die Linse 25 abgebildet. Die Linse 25 wiederum bildet diese einfallenden Strahlen auf einen gemeinsamen Bildpunkt am Detektor ab. Aus der Position des Bildpunkts am Detektor 24 kann sodann, z. B. über eine Kalibrierfunktion, auf die Position des Laserpunkts an der Wand und auf die Entfernung dieses Punkts z.B. zum Laser, als zum Erzeugungsort geschlossen werden. Bei der Lasertriangulation wird also der Laserstrahl auf das Messobjekt, hier also die Bohrungswand, fokussiert und mit dem Detektor beobachtet. Ändert sich die Entfernung des Messobjektes vom lagefesten Laser oder vom im gleichen Bezugssystem lagefesten Detektor, ändert sich auch der Winkel, unter dem der Lichtpunkt beobachtet wird und damit die Position seines Abbildes auf dem Detektor. Aus der Positionsänderung wird mit Hilfe der Winkelfunktionen die Entfernung des Objektes bzw. des Reflexionsorts vom Laserprojektor berechnet.

Fig. 4 zeigt in einer Querschnittsansicht die Bohrung 2 sowie den Verlauf der bei einer 360°-Drehung des Spiegels 20 emittierten Laserstrahlen. Der Laserstrahl wird von dem Laser 19 in der Mitte der Bohrung emittiert. Er trifft auf den Drehspiegel 20, der ihn um 90° zur Seite hin auf die Bohrungswand 8 ablenkt. In Fig. 4 sind exemplarisch mehrere Laserstrahlen 28 dargestellt. Ersichtlich ist es möglich, die gesamte Bohrungswand hierüber abzutasten. Der Laserstrahl 28 selbst ist ein möglichst feiner punktförmiger Strahl, der gepulst abgegeben wird.

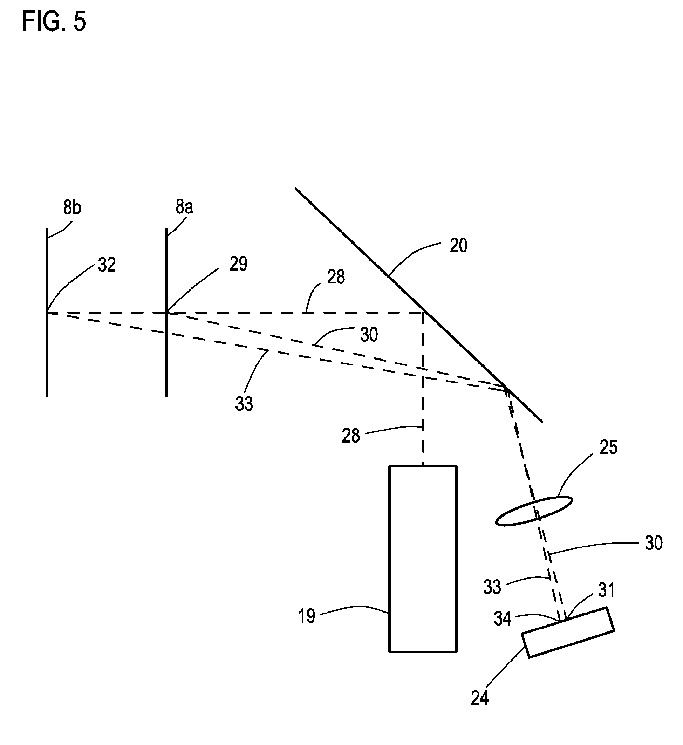

Fig. 5 zeigt das Messprinzip. Gezeigt ist der Laser 19, der den Laserstrahl 28 emittiert. Dieser trifft auf den Spiegel 20 und wird um 90° im gezeigten Beispiel nach links abgelenkt. Gezeigt sind zwei unterschiedlich weit vom lagefesten Laser 19 bzw. vom lagefesten Detektor 24 entfernte Reflexionsflächen einer Bohrungsoberfläche, nämlich zum einen die Reflexionsfläche 8a, zum anderen die Reflexionsfläche 8b. Es wird angenommen, dass jede Bohrungsoberfläche respektive Oberfläche Inhomogenitäten aufweist, mithin also keine ideale Fläche ist. Je größer der Verschleiß und folglich etwaige Oberflächeninhomogenitätenrauhigkeiten, umso größer sind folglich die oberflächlichen Eintiefungen und Erhöhungen, folglich auch die Rauhigkeit und umso stärker variieren folglich lokale Abstände von Oberflächenpunkten zu den feststehenden Komponenten des Messsystems. Dieser Verschleiß und die daraus resultierenden unterschiedlich weit vom Messsystem beabstandeten Reflexionsflächen bzw. Reflexionsstellen einer Oberfläche sind (aus Gründen der Verständlichkeit extrem übertrieben) durch die beiden Reflexionsflächen 8a, 8b dargestellt.

Der Laserstrahl 28 wird nun im Punkt 29 an der zunächst betrachteten, näher zum Messsystem liegenden Reflexionsfläche 8a diffus reflektiert. Der Reflexionslichtstrahl 30 - gezeigt ist hier nur der Zentralstrahl, der nach dem Fermat'schen Prinzip den kürzesten Lichtweg darstellt - wird unter einem Winkel zum Einfallslichtstrahl 28 reflektiert. Er trifft auf den Drehspiegel 20, von wo aus er auf die Linse 25 und über diese auf den Detektor 24 abgelenkt wird. Dort trifft er im Punkt 31 auf, wobei dieser Punkt, nachdem der Detektor 24 feststeht, eindeutig über entsprechende Koordinaten des Detektorsystems respektive der Lasermesseinrichtung 16 erfasst werden kann. Das heißt, dass diesem lokalen Auftreffpunkt eine genaue Koordinatenbeschreibung zugeordnet werden kann.

Ist nun die Reflexionsfläche verschleißbedingt weiter beabstandet, wie im Beispiel mit der Reflexionsfläche 8b dargestellt, so trifft der nun einen weiteren Weg zurücklegende Laserstrahl 28 wiederum in einem Punkt 32 auf der Oberfläche der Reflexionsfläche 8b auf und wird auch dort, da eine gewisse Inhomogenität gegeben ist, diffus reflektiert. Der Relektionslichtstrahl 33 trifft ebenfalls auf den Spiegel 20 und wird von dort wiederum über die Linse 25 auf den flächigen Detektor 24 abgelenkt. Dort trifft er im Punkt 34 auf. Ersichtlich ist dieser Punkt 34 relativ zum Punkt 31 versetzt angeordnet, wobei dieser Versatz aus den unterschiedlichen Abständen der Reflexionsflächen 8a bzw. 8b zu dem lagefesten Laser 19 bzw. Detektor 24 resultiert. Das heißt, dass letztlich die konkrete Position des Auftreffortes des Reflexionslichtstrahls am Detektor 24 ein Maß für den Abstand ist.

Aus diesem Auftreffort kann nun durch trigonometrische Betrachtung, also auf Basis einer Triangulationsbetrachtung, oder durch Kalibrierung des Messsystems mit bekannten Abständen ein konkreter Abstandswert bestimmt werden, nachdem die entsprechenden, hierfür benötigten Parameter bekannt sind. Als Abstandswert wird der Abstand des Reflexionsorts zum Laser ermittelt, also der Weg des kollimierten Laserstrahls. Alternativ kann auch der Abstand des Reflexionsorts zum Detektor ermittelt werden.

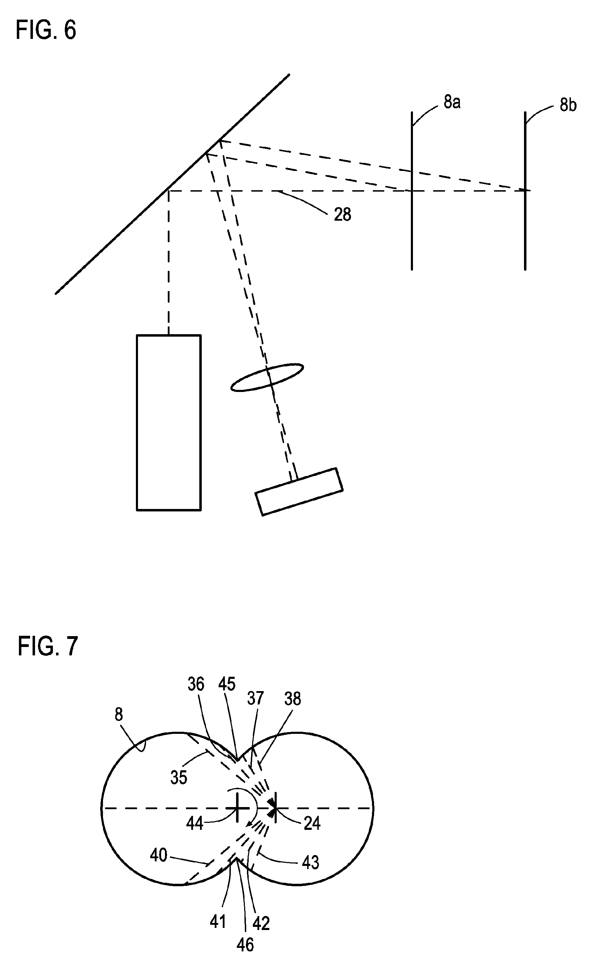

Während in Fig. 5 (gleiches gilt für Fig. 6) nur der Zentralstrahl gezeigt ist, ergibt sich an der Bohrungswand tatsächlich eine diffuse Reflexion, d.h. dass auf den Spiegel 20 ein diffuses Strahlenbündel reflektiert wird. Ein Teil dessen wird vom Spiegel auf die Linse 25 reflektiert, die das Strahlenbündel auf einen gemeinsamen Bildpunkt auf dem Detektor 24 abbildet.

Fig. 6 zeigt die vergleichbaren Verhältnisse auf der anderen Seite, wenn also der Laserstrahl 28 aufgrund einer um 180° gedrehten Spiegelstellung zur anderen Seite reflektiert wird. Hier stellen sich vergleichbare Verhältnisse ein.

Ersichtlich kann nun durch Rotation des Spiegels 20 die Oberfläche der Bohrung abgetastet werden. Der Laser wird mit hoher Frequenz gepulst, die Frequenz des Drehspiegels beträgst wenigsten 20Hz, so dass sich pro 360°-Spiegeldrehung eine Vielzahl einzelner Abtaststellen messtechnisch erfassen lassen, das heißt, dass die entsprechenden Reflexionslicht-Messsignale am Detektor 24 für die einzelnen Punkte diskret ausgelesen und erfasst werden sowie zu jedem einzelnen Messsignal respektive detektorseitigen Messpunkt die entsprechenden Abstandswerte seitens der Verarbeitungseinrichtung 17 ermittelt werden. Wird nun die Vorrichtung 1 langsam durch die Bohrung 2 bewegt, so ergeben sich während dieser Axialbewegung eine Vielzahl einzelner diskreter Abstandsmesswerte, aus denen dann ein Oberflächen- oder Rauhigkeitsprofil erstellt werden kann, das an einer geeigneten Anzeigevorrichtung visualisiert werden kann. Aus diesen Informationen kann sodann auf den Verschleißzustand der Oberfläche geschlossen werden.

Die Lasermesseinrichtung 16 in Verbindung mit der Verarbeitungseinrichtung 17 ermöglicht aber nicht nur die Erfassung der Abstandswerte zur Bohrungswand hin, sondern auch die Ermittlung der eigenen Position innerhalb der Bohrung. Fig. 7 zeigt, wie diese eigene Positionserfassung dem Grunde nach erfolgt.

Gezeigt sind vier von der Bohrungswand 8 zum Detektor laufende Abstandslinien 35, 36, 37, 38 in der oberen Bohrungshälfte, sowie die Abstandslinien 40, 41, 42, 43 in der unteren Bohrungshälfte. Der Detektor 24 befindet sich angenommenermaßen exzentrisch zur Bohrungsmittel 44. Es sei angenommen, dass die Laserstrahlen im Uhrzeigersinn erzeugt respektive zurückreflektiert werden.

Wie beschrieben wird seitens der Verarbeitungseinrichtung 17 der jeweilige Abstand des Lasers 19 oder Detektors 24 respektive des diskreten Auftreffpunkts des Reflexionslichts zur Bohrungswand ermittelt. Das heißt, dass zu jeder der Abstandslinien 35 - 38 wie auch 40 - 43 ein konkreter Abstandswert erfasst wird bzw. bekannt ist. Ersichtlich ändert sich im Bereich zwischen den Strahlen 36 - 37 respektive 42 - 41 der Abstandswert relativ abrupt, resultierend aus der jeweiligen Lage des Zwickels 45, 46. Das heißt, dass die Verarbeitungseinrichtung bei einem einmaligen 360°-Umlauf des Spiegels, während welchem natürlich auch die Bereiche im jeweiligen Zwickel 45, 46 abgetastet werden, zusätzlich auch die entsprechenden Abstandsinformationen hierzu erhält und letztlich konkret die jeweiligen Zwickelpositionen im Koordinatensystem des Messsystems ermitteln kann. Dies geschieht wiederum durch eine Triangulationsbetrachtung. Da zu jedem Abstandswert auch die Spiegeldrehposition bekannt ist, sind folglich auch die entsprechenden geometrischen Strahlwinkel zum jeweiligen Zwickel 45, 46 bekannt. Es ergibt sich folglich ein Strahldreieck mit zwei Seitenlängen, gegeben durch den jeweiligen Abstandswert, sowie einer dritten Seite, nämlich dem Zwickelabstand, der die Basis bildet. An der gegenüberliegenden Spitze des virtuellen Dreiecks befindet sich der Detektor 24.

Diese Positionsbestimmung kann wie gesagt letztlich während jedes 360°-Spiegelumlaufs oder während jedes n-ten Umlaufs vorgenommen werden, so dass eine kontinuierliche Bestimmung der Eigenposition des Detektors und damit der Vorrichtung 1 innerhalb der Bohrung möglich ist. Ergibt sich hieraus, dass sich während des axialen Verschiebens die Position verändert, so kann dies - nachdem sich dann ja zwangsläufig auch die ermittelten Abstandswerte infolge der Veränderung der Detektorlage etwas verändert, bei der späteren Auswertung berücksichtigt werden und beispielsweise im Rahmen einer Koordinatentransformation oder der Einberechnung eines Korrekturfaktors und ähnlichem eine entsprechende Kompensation erfolgen.

Zur Messung wird die Vorrichtung 1 in die Bohrung eingeführt. Um sicherzustellen, dass bereits unmittelbar am Bohrungsbeginn der Messung angefangen werden kann, besteht die Möglichkeit, am Bohrungseingang einen Zuführadapter anzusetzen, dessen Form der Bohrung entspricht und in den die Vorrichtung 1 zunächst eingeschoben wird. Aus diesem wird er sodann in die Bohrung eingeführt, wobei unmittelbar am Bohrungseingang die Messung begonnen werden kann.

Damit die Vorrichtung 1 unterschiedliche Bohrungsgrößen vermessen kann, ist es möglich, dass die Roll- und Gleitführungsmittel 4, 5 austauschbar sind. Sie können also gegen längere oder kürzere Roll- und Gleitführungsmittel ausgetauscht werden, je nachdem, wie nun konkret die Bohrung bemessen ist. Der Schlitten 3 selbst wie auch seine Bestückung bleibt stets gleich.

## Patentansprüche

1. Vorrichtung zum Erfassen von Messinformationen von einer inneren Oberfläche eines Hohlkörpers, insbesondere einer Bohrung eines ein- oder zweiwelligen Extruderzylinders, umfassend einen durch den Hohlkörper zu bewegenden Schlitten (3) mit Roll- und/oder Gleitführungsmitteln (4, 5) zur Bewegungslagerung auf der Oberfläche (8), sowie eine am Schlitten (3) vorgesehenen Laser-Messeinrichtung (16) umfassend einen positionsfest angeordneten Laser (19), der einen Laserstrahl (28) im Wesentlichen parallel zur Schlittenlängsachse emittiert, einen drehbaren Spiegel (20) zum Ablenken des Laserstrahls (28) auf die Oberfläche (8) und zum Ablenken eines von der Oberfläche (8) reflektierten Reflexionslichts (30) auf einen positionsfest angeordneten Detektor (24), der ein mittels einer Verarbeitungseinrichtung (17) auswertbares Messsignal erzeugt.

2. Vorrichtung nach Anspruch 1, **dadurch gekennzeichnet, dass** die Verarbeitungseinrichtung (17) zur trigonometrischen Auswertung der Messsignale zur Ermittlung des Abstands des Lasers (19) oder des Orts, an dem das Reflexionslicht auf den Detektor (24) trifft, von der Oberfläche (8) ausgebildet ist.

3. Vorrichtung nach Anspruch 2, **dadurch gekennzeichnet, dass** die Verarbeitungseinrichtung (17) durch Auswertung der ermittelten Abstandswerte zur Ermittlung zweier für die Geometrie des Hohlkörpers (2) charakteristischer Orte, insbesondere der Zwickel (45, 46) einer Brillenbohrung eines Zweischneckenzylinders und anhand der zu diesen erfassten Abstandswerte und des Winkels von vom Detektor zu diesen Orten laufenden Verbindungslinien relativ zu einer Bezugsebene zur trigonometrischen Ermittlung der Position des Detektors (24) relativ zu den Orten ausgebildet ist.

4. Vorrichtung nach einem der vorangehenden Ansprüche, **dadurch gekennzeichnet, dass** eine Messeinrichtung, insbesondere ein Encoder (23) zur kontinuierlichen Erfassung der Spiegelposition vorgesehen ist.

5. Vorrichtung nach einem der vorangehenden Ansprüche, **dadurch gekennzeichnet, dass** der Spiegel (20) mit einer Frequenz von wenigstens 10 Hz, insbesondere wenigstens 20 Hz, rotiert.

6. Vorrichtung nach einem der vorangehenden Ansprüche, **dadurch gekennzeichnet, dass** dem Detektor (24) wenigstens eine Linse (25) vorgeschaltet ist.

7. Vorrichtung nach einem der vorangehenden Ansprüche, **dadurch gekennzeichnet, dass** der Laser (19) gepulst betrieben wird.

8. Vorrichtung nach einem der vorangehenden Ansprüche, **dadurch gekennzeichnet, dass** der Laser (19) ein Infrarot-Laser, vorzugsweise mit einer Leistung von wenigstens 10 mW, insbesondere von wenigstens 20 mW, ist.

9. Vorrichtung nach einem der vorangehenden Ansprüche, **dadurch gekennzeichnet, dass** der Schlitten (3) über die beweglich gelagerten Roll- und/oder Gleitführungsmittel (4, 5) selbstzentrierend in dem Hohlkörper (2) positionierbar ist.

10. Vorrichtung nach Anspruch 9, **dadurch gekennzeichnet, dass** die Roll- und/oder Gleitführungsmittel (4, 5) jeweils gegen die Rückstellkraft wenigstens eines, vorzugsweise mehrerer Federelemente (6, 7), beweglich gelagert sind.

11. Vorrichtung nach Anspruch 9 oder 10, **dadurch gekennzeichnet, dass** zwei um 180° versetzt zueinander am Schlitten (3) angeordnete erste Rollführungsmittel (4) umfassend jeweils mehrere hintereinander angeordnete, vorzugsweise miteinander bewegungsgekoppelte, Rollen (10), sowie wenigstens zwei, vorzugsweise vier, weitere Roll- oder Gleitführungsmittel (5) vorgesehen sind.

12. Vorrichtung nach Anspruch 11, **dadurch gekennzeichnet, dass** die weiteren Roll- oder Gleitführungsmittel (5) als Rollenreihen oder als Gleitkufen (14) ausgebildet sind.

13. Vorrichtung nach einem der vorangehenden Ansprüche, **dadurch gekennzeichnet, dass** wenigstens einem Roll- und/oder Gleitführungsmittel (4, 5), insbesondere dem ersten Rollführungsmittel (4) ein der Bestimmung der axialen Position des Schlittens (3) im Hohlkörper dienende Messsignale lieferndes Erfassungsmittel, insbesondere ein mit einer Rolle (10) bewegungsgekoppelter Encoder (13), zugeordnet ist.

14. Vorrichtung nach Anspruch 13, **dadurch gekennzeichnet, dass** die Verarbeitungseinrichtung (17) zur Zuordnung der ermittelten Abstandswerte zu ermittelten axialen Position des Schlittens (3) ausgebildet ist.

15. Verfahren zur Ermittlung von Zustandsinformationen einer Oberfläche eines Hohlkörpers, insbesondere einer Bohrung eines ein- oder zweiwelligen Extruderzylinders, unter Verwendung einer Vorrichtung zur berührungslosen Oberflächenabtastung mittels eines Lasers, vorzugsweise einer Vorrichtung nach einem der vorangehenden Ansprüche, **dadurch gekennzeichnet, dass** eine Vorrichtung umfassend einen durch den Hohlkörper bewegten Schlitten, an dem positionsfest der Laser und ein Detektor sowie ein rotierender Spiegel angeordnet sind, verwendet wird, wobei der von dem Laser im Wesentlichen in Richtung der Längsachse des Schlittens emittierte Laserstahl mittels des um die Längsachse rotierenden Spiegels auf die Oberfläche gelenkt und ein von der Oberfläche reflektiertes Reflexionslicht über den Spiegel auf den Detektor gelenkt wird, der Messsignale liefert, die von einer Verarbeitungseinrichtung kontinuierlich zur Bestimmung des Abstands des Orts des Lasers oder des Orts, an dem das Reflexionslicht auf den Detektor trifft, von der Oberfläche ausgewertet werden.

16. Verfahren nach Anspruch 15, **dadurch gekennzeichnet, dass** in der Verarbeitungseinrichtung anhand der während eines 360°-Umlaufs des Spiegels ermittelten Abstandswerte zwei für den Hohlkörper charakteristische Orte, insbesondere die Zwickel einer Brillenbohrung eines Zweischneckenzylinders, ermittelt werden und anhand der zu diesen erfassten Abstandswerte und der Winkel von vom Detektor zu diesen Orten laufenden Verbindungslinien relativ zu einer Bezugsebene die Position des Detektors relativ zu den Orten trigonometrisch ermittelt wird.

17. Verfahren nach Anspruch 15 oder 16, **dadurch gekennzeichnet, dass** kontinuierlich die axiale Position der Vorrichtung im Hohlkörper ermittelt und den erfassten Abstandswerten zugeordnet wird.
